# EUROPEAN PATENT SPECIFICATION

(11) **EP 3 187 235 B1**
(45) Date of publication and mention of the grant of the patent: **23.03.2022**
(21) Application number: 16189199.9
(22) Date of filing: 16.09.2016
(51) Int. Cl.: A63F 13/245, G06F 3/01, G09B 9/10, G09B 9/16

(54) **NAVIGATION CONTROLLER FOR VIRTUAL-REALITY SYSTEMS**
NAVIGATIONSSTEUERGERÄT FÜR SYSTEME DER VIRTUELLEN REALITÄT
SYSTÈMES DE COMMANDE DE NAVIGATION POUR SYSTÈMES DE RÉALITÉ VIRTUELLE

(30) Priority: 31.12.2015 US 201514985806; 04.01.2016 WO PCT/US2016/012039
(43) Date of publication of application: 05.07.2017
(73) Proprietor: Facebook Technologies, LLC, Menlo Park, CA 94025 (US)
(72) Inventor: PETROV, Yury Anatolievich, Menlo Park, CA 94025 (US)
(74) Representative: Murgitroyd & Company

(56) References cited:
- WO-A1-2004/000430
- WO-A1-2006/119568
- WO-A1-2011/135154
- US-A- 5 584 700
- US-A- 5 782 639
- US-A1- 2014 309 035
- US-A1- 2015 201 758

## Description

### TECHNICAL FIELD

This disclosure relates generally to gaming entertainment and virtual-reality systems, and more specifically to a navigation controller for simulation of pitch and/or yaw motion for use in such gaming entertainment and virtual-reality systems while providing vestibular (balance), somatosensory (skin), and proprioceptive (muscle) sensations to accompany the visually experienced acceleration in real life and prevent simulator (motion) sickness.

### BACKGROUND

Virtual-reality simulation systems are becoming increasingly popular for applications such as video gaming and operator skill and developmental training. Such virtual-reality simulation systems are generally designed to mimic an object environment for a targeted application. For example, video simulators have been proposed for simulating the dynamics of aircraft, marine vessels, locomotives and automobiles. In each of these examples, the objective of the video simulation system is to mimic visual and motion characteristics of an environment associated with operation of the object under simulated conditions.

It is important to accurately simulate the dynamics of an object environment, especially where the associated application is training, for example flight operator training. The operator's experience within the simulator should closely resemble real-world conditions in order to build adequate experience, skill and to anticipate reactions of the operator in preparation for a real-world event or condition.

Currently available systems have yet to provide a cost-effective and adequate motion simulation platform. To be cost effective, it would be beneficial to provide such a platform with relatively few moving components and a reasonable size. There is a need in the art to overcome the challenges of providing fewer mechanical parts while maintaining adequate motion simulation. Thus, there is an ongoing need for improved motion platforms for use with video virtual-reality simulation systems, especially such platforms configured for low cost, simple and effective mechanical motion simulation.

PCT patent application no. WO 2006/119586 AI discloses a controller means for controlling a computer game defining a support means which may include a seat or the like on which a player may sit, stand or be supported. The support means is disposed on a bearing means incorporating or associated with a control means. The control means may include a frame made up of rods or bars which are typically joined by hinges and removable clamps so that the frame can be easily disassembled and folded up for storage. Cross beams extending upwards from the corners of the frame are provided to brace the frame and provide support for a bearing and control means and provide additional rigidity to the frame.

PCT patent application no. WO 2011/135154 discloses a game controller including a seat including a rotatable connector to allow tilting and the measured movements of the seat are transmitted to the game console to control some aspects of the game. US patent application no. US 2015/201758 A1 discloses a chair with a rotatable connector allowing the chair to tilt along C-shaped rails, and is useful for understanding the present invention.

### SUMMARY

Disclosed motion simulation provides vestibular (balance), somatosensory (skin) and proprioceptive (muscle) sensations or stimulation during active (self-initiated) virtual-reality navigation, which accompanies visually experienced sensations in reality. For example, yaw motion about a vertical axis and pitch motion corresponding to tilting of the navigation controller are used to simulate motion with acceleration in virtual-reality, while providing appropriate vestibular (balance), proprioceptive (muscle) and somatosensory (skin) stimulation to accompany the visually experienced acceleration and prevent simulator sickness, which is similar to motion sickness.

According to the invention there is provided a virtual-reality navigation controller in accordance with claim 1.

Herein, the arc referred to may be an arc described by the seat. The support may form a vertical support in use. Tilt may be with respect to an axis that is, in use, oriented essentially vertically, e.g. an essentially vertical axis defined by the support when the base is placed on a generally horizontal support surface such as a floor. The rotatable connector may be arranged to guide movement of the seating portion with respect to the support and the base, such as to allow horizontal and vertical displacement in use, i.e. with the base placed on a generally horizontal support surface such as a floor. The tilt may then be due to vertical and horizontal displacement of the seating portion.

The seat may extend lengthwise along an, in use, essentially horizontal axis from a proximal end to a distal end, at least a portion of a length of the seat on both left and right sides being concavely curved toward a center axis along the length of the seat to narrow the seat toward the distal end and to accommodate legs of the user during chair movements.

The motion-detection controller is communicatively coupleable or coupled to a virtual-reality device, e.g. a virtual-reality device including at least one display device and/or a virtual-reality device mountable to a user's head, configured to initiate corresponding tilting motions in virtual reality, e.g. as rendered by the virtual-reality device.

The motion-detection controller may be configured to measure yaw corresponding to rotation of the seating portion about an axis of the support, e.g. an in use essentially vertical axis of the support.

Optionally, the plurality of rollers may be included in a roller portion coupled to the support.

The arc may correspond to an upward arc of each rail of the second pair of parallel rails based on the rotational center and ranges from 300 mm to 800 mm, to prevent counter-phase movement of the user's head in relation to the movement of the seating portion.

The second pair of parallel rails may be slidably engaged with the plurality of rollers; and
the plurality of rollers is secured within the second pair of parallel rails to slidably tilt the seating portion along the circumferences of the second pair of parallel rails.

The plurality of rollers may comprise a first pair of rollers slidably engaged in a first rail of the second pair of parallel rails and a second pair of rollers slidably engaged in a second rail of the second pair of parallel rails.

A radius of an upward arc of each rail of the second pair of parallel rails may be approximately 700 mm to prevent counter-phase movement of the user's head in relation to the movement of the seating portion.

Each rail of the second pair of parallel rails may comprise a dip at a bottom portion of the C-shape curved profile; and in a non-tilted position of the seating portion, respective rollers of the plurality of rollers may be disposed in a resting position in the dips.

The respective rollers may be configured to be shifted out of the dips from the resting position to a tilting position when the user exerts at least one of a backward pushing force or a forward pulling force on the seating portion; and
the plurality of rollers may be configured to be returned to the resting position naturally by a weight of the user sitting on the seating portion when the user ceases to apply the at least one of the pushing or pulling force.

The backward pushing force may comprise a force exerted by the user pushing backwards with feet resting on the floor while sitting in the seating portion; and
the forward pulling force may comprise a force exerted by the user pulling forward with feet resting on the floor while sitting in the seating portion, wherein, optionally, a maximum tilting displacement due to at least one of a backward tilt and a forward tilt of the seating portion based on a circumference of each rail of the second pair of parallel rails measured from a center of the bottom portion of each rail of the second pair of parallel rails in the corresponding backwards or forward direction may be approximately 300 mm.

The virtual-reality navigation controller may further comprise a counterbalance weight to facilitate tilting of the seating portion backward by exerting a downward force on a back portion of the first and second pairs of parallel rails.

The radius of the arc formed by the tilting about the rotational center of the rotatable connector may range from 500 mm to 700 mm; and/or
the seating portion may be rotatably coupled to the support to be rotatable about an axis of the support, e.g. an in use vertical axis of the support, and the motion-detection controller configured to measure a degree of the rotation and communicate the degree of the rotation to a virtual-reality device to initiate corresponding rotation in virtual-reality; and/or
the motion-detection controller may be coupled to the seating portion.

The virtual-reality navigation controller may further comprise a head-rest configured to support a head of the user seated in the seating portion and coupled to the back-rest, wherein the rotatable connector may be configured to tilt the seating portion about an axis of the head-rest at a point located near the user's head when the user is seated on the seat, and
the motion-detection controller coupled to the head-rest.

The base may comprise wheels which are configurable to be locked during tilting of the seating portion and freely rotatable when the seating portion is configured for use as a chair during non-virtual-reality activities; and the rotatable connector may be configured to lock the seating portion into a desired configuration for use as a chair during the non-virtual-reality activities.

Various advantages of the present application are apparent in light of the descriptions below.

Embodiments disclosed in the attached claims are directed to a virtual-reality navigation controller. The scope of the invention is defined by the appended claims.

### BRIEF DESCRIPTION OF THE DRAWINGS

For a better understanding of the various described embodiments, reference should be made to the Detailed Description below, in conjunction with the following drawings. Like reference numerals refer to corresponding parts throughout the figures and description.
Figure 1 illustrates a front perspective view of a virtual-reality navigation controller in accordance with the invention.
Figures 2 and 3 illustrate partially exploded back perspective views of the virtual-reality navigation controller of Figure 1.
Figure 4 illustrates an exploded front perspective view of the virtual-reality navigation controller of Figure 1.
Figure 5 illustrates a back perspective view of the virtual-reality navigation controller of Figure 1.
Figure 6 illustrates a front perspective view of a virtual-reality navigation controller further comprising a vertical support in the form of a displacement connector.

### DETAILED DESCRIPTION

Reference will now be made to examples of the invention which are illustrated in the accompanying drawings. In the following description, numerous specific details are set forth in order to provide an understanding of the various described examples. However, it will be apparent to one of ordinary skill in the art that the various described examples may be practiced without these specific details. In other instances, well-known systems, methods, procedures, components, circuits, and networks have not been described in detail so as not to unnecessarily obscure aspects of the examples.

It will also be understood that, although the terms first, second, etc. are, in some instances, used herein to describe various elements, these elements should not be limited by these terms. These terms are used only to distinguish one element from another. For example, a first pair could be termed a second pair, and, similarly, a second pair could be termed a first pair, without departing from the scope of the various described examples. The first pair and the second pair are both pairs, but they are not the same pair.

The terminology used in the description of the various examples described herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Virtual-reality systems may generally include expensive motion platforms to provide the missing vestibular stimulation in their virtual-reality simulators. Navigating an immersive virtual-reality environment can cause an unpleasant sensation termed simulator sickness. Simulator sickness experience is similar to motion sickness and is very common in virtual-reality scenarios involving various accelerations, including stops, turns, rotations, sways, and jumps. Simulator sickness is a serious hurdle for the future of the virtual-reality industry, because these navigation scenarios are unavoidable in virtual-reality systems aiming to provide immersive and real-feeling virtual-reality environments. The main cause of the simulator sickness is the lack of vestibular (balance) sensation, which generally accompanies visually experienced acceleration in real life.

Typical motion platforms used with virtual-reality systems present the problem of providing insufficient vestibular (balance), proprioceptive (muscle), and somatosensory (skin) sensation or stimulation for the user to match the visualized motion in virtual-reality, thereby making the user more prone to simulator sickness. The large size and expense of typical motion platforms also makes them impractical in many applications.

Accordingly, the present disclosure describes virtual-reality navigation controllers capable of providing the necessary vestibular (balance) sensation or stimulation during active (self-initiated) virtual-reality navigation, which accompanies visually experienced sensations in reality. The disclosed virtual-reality navigation controllers have a practical size and a reasonable cost, because they are shaped and sized as a chair.

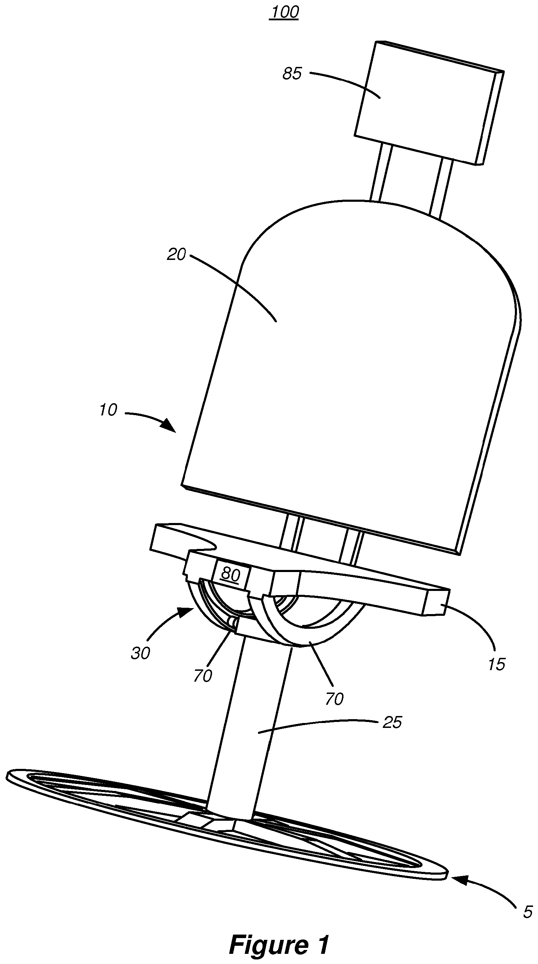

Figure 1 illustrates a perspective view of a virtual-reality navigation controller 100 in accordance with the invention. The virtual-reality navigation controller 100 includes a base 5 and a seating portion 10. The seating portion 10 includes a seat 15 for supporting a weight of a user seated thereon, and a back-rest 20 coupled to the seat 15 to move integrally with the seat 15 and to support the user's back when seated on the seat 15. The navigation controller 100 further includes a vertical support 25 to support the seating portion 10 on the base 5, and a rotatable connector 30 between the seating portion 10 and the vertical support 25 to tilt the seating portion 10 about a rotational center of the rotatable connector 30 when the user is seated on the seat 15. The tilting occurs about a point (i.e., an axis) located in or adjacent to the user's head. A radius of an arc formed by the tilting about the rotational center ranges from 300 mm to 800 mm, or from 500 mm to 700 mm, or approximately 600 mm, or approximately 700 mm. By approximately, it is intended that the radius of the upwards arc be within 2% of the stated value. The aforementioned configuration provides the advantage of preventing an undesirable vestibular signal counter to the simulated motion (e.g. acceleration, or deceleration) in virtual-reality. The prevention of the undesirable vestibular (balance) signal is achieved by providing the radius of the arc at a measurement equaling or exceeding the distance between the seat 15 and head center of an average height seated user. Though recited in terms of certain ranges, it will be understood that all ranges from the lowest of the lower limits to the highest of the upper limits are included, including all intermediate ranges or specific radius values, within this full range or any specifically recited range. The navigation controller 100 further includes a motion-detection controller 80 to measure pitch corresponding to a tilt of the seating portion 10. The motion-detection controller 80 is shown mounted on the seat 15 but may be mounted elsewhere (e.g., on the back-rest 20).

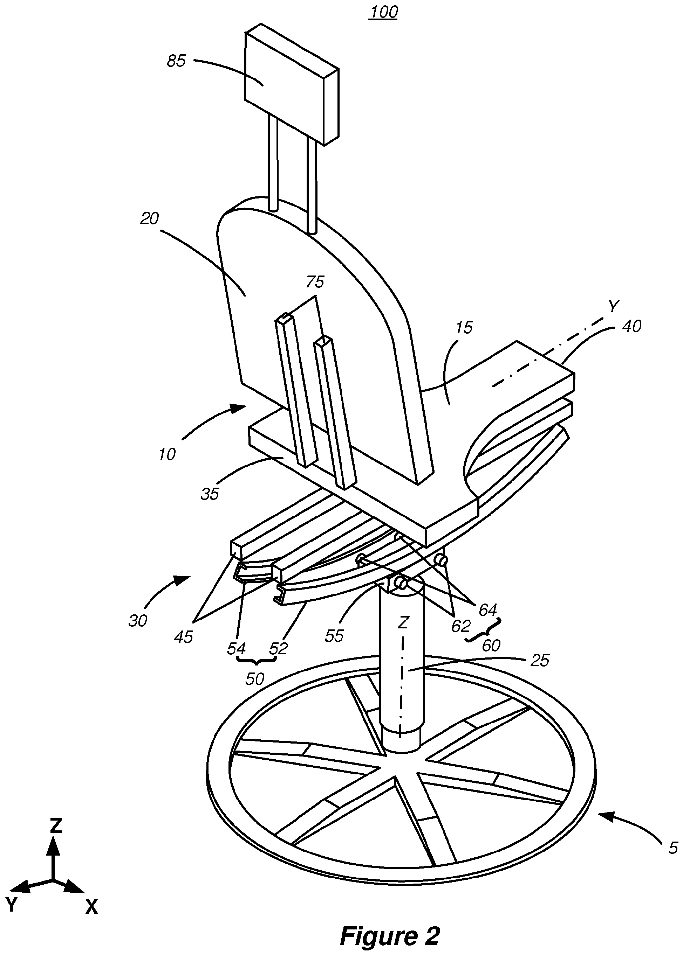

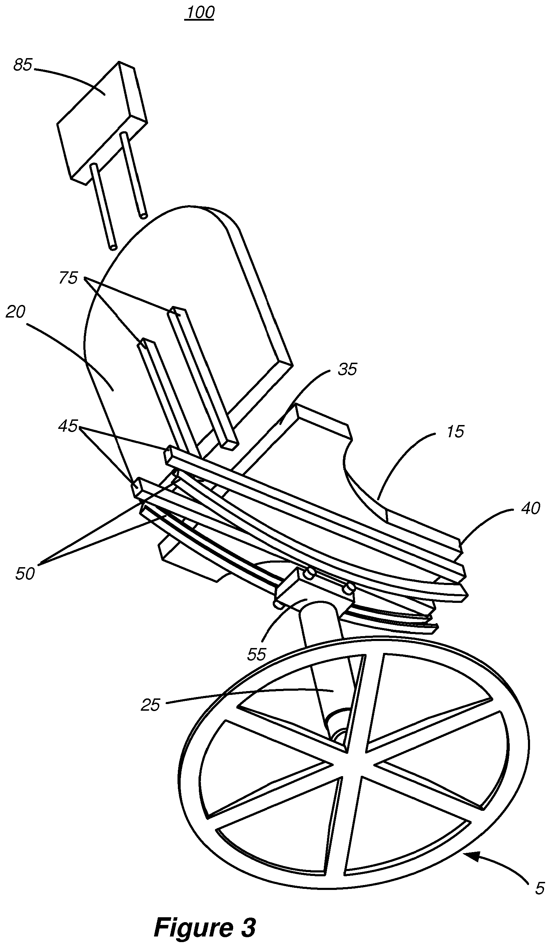

Figures 2 and 3 illustrate exploded back views of the virtual-reality navigation controller 100. The seat 15 extends lengthwise along a horizontal axis (e.g., a center axis Y) from a proximal end 35 to a distal end 40. At least a portion of a length of the seat 15 on both left and right sides is concavely curved toward the center axis Y along the length of the seat to narrow the seat toward the distal end 40 and to better accommodate legs of the user during yaw, tilt, and/or vertical chair movements. This configuration of the seat 15 provides adequate support for the user seated thereon while minimally restricting movement of the user's legs as compared with a general seat design. The seat 15 configuration thus provides the advantage that the user is able to push back or pull forward in the seat 15 using feet firmly placed on the ground without his/ her legs abutting against or being interfered with by edges of the distal end 40 of the seat 15 during virtual-reality activities.

The back-rest 20 supporting the user's back is coupled at its lower end to the proximal end 35 of the seat through at least one reinforcement bar 75. The reinforcement bar 75 lends structural integrity to the back-rest, and reinforces the coupling between the back-rest 20 and the seat 15. The back-rest 20 may be hingedly connected, at a lower end thereof, to the proximal end 35 of the seat 15 in order to rotate and/or tilt integrally with the seat 15. For example, the back-rest 20 may be coupled to the seat 15 at varying off-perpendicular angles to allow the user to adjust the angle at which the back-rest 20 is coupled to the seat 15 for comfort.

The motion-detection controller 80 is configured to measure pitch corresponding to the tilt of the seating portion 10 (e.g., with respect to the vertical support 25). The motion-detection controller 80 may be integrated with motion sensors (not shown) which measure a degree of tilting of the seating portion 10. Alternatively, the motion sensors may be separate from the motion-detection controller 80, and may be positioned, for example on the seating portion 10. Alternatively, the motion sensors may be distal, video-based sensors located on the floor or desktop in the proximity of the chair. Tilting of the seating portion 10 may be initiated by the user either pushing backwards or pulling forward with feet firmly placed on the ground. This way a user is able to control a degree of tilting of the seating portion 10 to achieve a desired backwards or forward movement to correspond to an acceleration or deceleration in virtual-reality. To achieve this effect, the motion-detection controller 80 is communicatively coupleable to a virtual-reality device (e.g., a virtual-reality headset or head mounted display (HMD)) to initiate corresponding tilting motions in virtual-reality. The motion detection controller 80 is configured such that it is able to detect, through the sensors, the degree of tilt (e.g. the angle of tilt) corresponding to a vertical and a horizontal displacement of the seating portion 10 in reality, and to communicate the data corresponding to the tilt to the virtual-reality device so that the user's avatar in virtual-reality may be subjected to a motion (e.g. acceleration or deceleration) matching the degree of tilt in reality. Because the user is subjected to a physical motion in reality which matches a motion in the virtual-reality, the user's vestibular and muscle senses are stimulated synchronously with visual sense, thereby reducing or eliminating altogether simulator (motion) sickness.

The seating portion 10 is rotatably coupled to the vertical support 25 to be rotatable about a vertical axis Z of the vertical support 25, and the motion-detection controller 80 is configured to measure yaw corresponding to rotation of the seating portion 10 about the vertical axis Z and communicate the degree of the rotation to the virtual-reality device (e.g., the HMD) to initiate corresponding rotation in virtual-reality. The motion detection controller 80 is able to detect the degree of rotation of the seating portion 10 in reality, and to communicate the measurements corresponding to the rotation to the virtual-reality device so that the user's avatar in virtual-reality may be subjected to a motion (e.g. turns) matching the degree of rotation in reality. Because vestibular, muscle and skin sensation experienced by the user during rotation in the seating portion match the experienced visual stimulation in the virtual-reality, the user is able to maintain vestibular balance, thereby minimizing or eliminating altogether simulator (motion) sickness.

The rotatable connector 30 includes a first pair of parallel rails 45 coupled to the seating portion 10 and a second pair of parallel rails 50 coupled to the first pair of parallel rails 45. Each rail 52 and 54 of the second pair of parallel rails 50 has a C-shaped curved profile. Each rail of the first pair of parallel rails 45 is straight. The rotatable connector 30 further includes a roller portion 55 including a plurality of rollers 60 rollably disposed along the curved profile of each rail of the second pair of rails 50. The roller portion 55 may be coupled to the vertical support 25. The rollers 60 slide within an inner portion of the C-shape profile of the corresponding rail 52 and 54 of the second pair of parallel rails 50. The C-shape is to guide the rollers along the profile of the second pair of parallel rails 50 so as to tilt the seating portion 10 at desired angles.

Rails 45, 52 and 54 of the first and second pairs of parallel rails 45 and 50 can be formed of one or more metals including but not limited to iron, copper, steel, aluminum, rubber, tin, or any similar materials.

Alternatively, the rails of the first and second pairs of parallel rails may be made of a hard plastic or similar durable material. Alternatively, the rails of the first and second pairs of parallel rails may be made of other materials including, but not limited to wood, glass, plexi-glass, fiberglass and the like, all of which may be reinforced in order to increase durability.

The first pair of parallel rails 45 is integrally formed with the seat 15. Alternatively, the first pair of parallel rails 45 may be coupled in a fixed manner to the seat 15 by a threaded screw, bolt, rivet or any similar fastener inserted through a similarly threaded hole on the seat 15 and locked in place. The first pair of parallel rails 45 may also be coupled in a fixed manner to the seat 15 by an adhesive, an ultrasonic weld or any similar plastic or metal fusion/welding process. The seat 15 and the first pair of parallel rails 45 may also be removably coupled in an adjustable manner by a magnet.

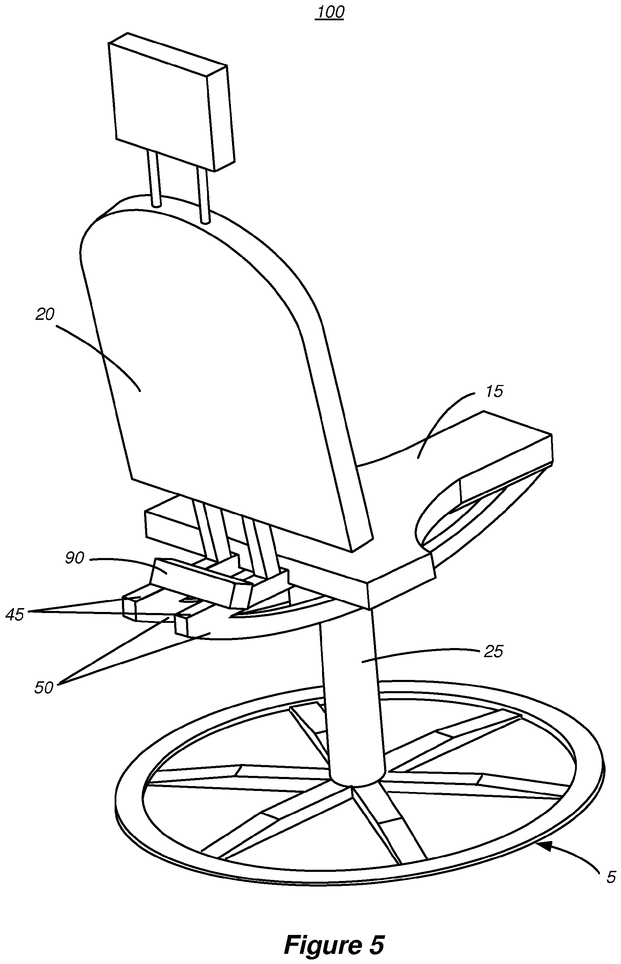

As illustrated in Figure 5, the first pair of parallel rails 45 is integrally formed with the second pair of parallel rails 50. Alternatively, the second pair of parallel rails 50 may be coupled in a fixed manner to the first pair of parallel rails 45 by a threaded screw, bolt, rivet or any similar fastener inserted through a similarly threaded hole on the first pair of parallel rails and locked in place. Alternatively, the second pair of parallel rails 50 may also be coupled in a fixed manner to the first pair of parallel rails 45 by an adhesive, an ultrasonic weld or any similar plastic or metal fusion/welding process. The first and second pairs of parallel rails 45 and 50 may also be removably coupled in an adjustable manner by a magnet (not shown).

The second pair of parallel rails 50 is slidably engaged with the roller portion 55 through the plurality of rollers 60. The plurality of rollers 60 is secured within the C-shaped curved profiles of the second pair of parallel rails 50 to slidably roll and thereby tilt the seating portion 10 along the circumferences of the second pair of parallel rails 50. The plurality of rollers 60 includes a first pair of rollers 62 slidably engaged in a first rail 52 of the second pair of parallel rails 50 and a second pair of rollers 64 slidably engaged in a second rail 54 of the second pair of parallel rails 50. When the user engages in a virtual-reality activity which involves accelerating forward (e.g. driving a race car and pressing on an accelerator pedal), the user may initiate a corresponding forward acceleration in real life by firmly placing feet on the floor and exerting a forward pulling force on the seating portion 10 while seated in the seat 15.

As a result, the first and second pair of rollers 62 and 64 will roll forward in the corresponding first and second rails 52 and 54 of the second pair of parallel rails 50, thereby pitching the seating portion 10 backwards, simulating a pulling force and creating a real-life physical feeling of a pulling gravity shift. As the user is pitched backwards in the seating portion 10, the user's eyes view a rapid acceleration in the race car virtual-reality environment, thereby creating an extra immersive and enhanced feeling of reality. Due to the motion of the seating portion caused by the rotatable connector 30, the user experiences proprioceptive (muscle) sensations due to muscle effort of the feet, and somatosensory (skin) sensations accompanying the visually experienced virtual-reality accelerations and decelerations. Because the user's mind is tricked into believing the user physically engaging in the visualized virtual-reality activity, the vestibular (balance) sensation is provided thereby greatly reducing or eliminating altogether simulator sickness.

The present configuration provides the advantage that unlike regular office chairs, which tilt around a swivel joint located underneath the seat, the navigation controller 100 of the various examples described herein has the effect of tilting the user about a point located in, or near (e.g., above) the user's head. Tilting about this point is achieved by the seat 15 rocking back and forth as result of the rollers 62 and 64 rolling along the C-shape profile of the respective first and second rails 52 and 54 of the second pair of parallel rails 50 positioned underneath the seating portion 10. Furthermore, because the rotations and tilts are powered by the user's feet pushing and pulling on the floor, no mechanical actuators are involved, thereby reducing manufacturing costs.

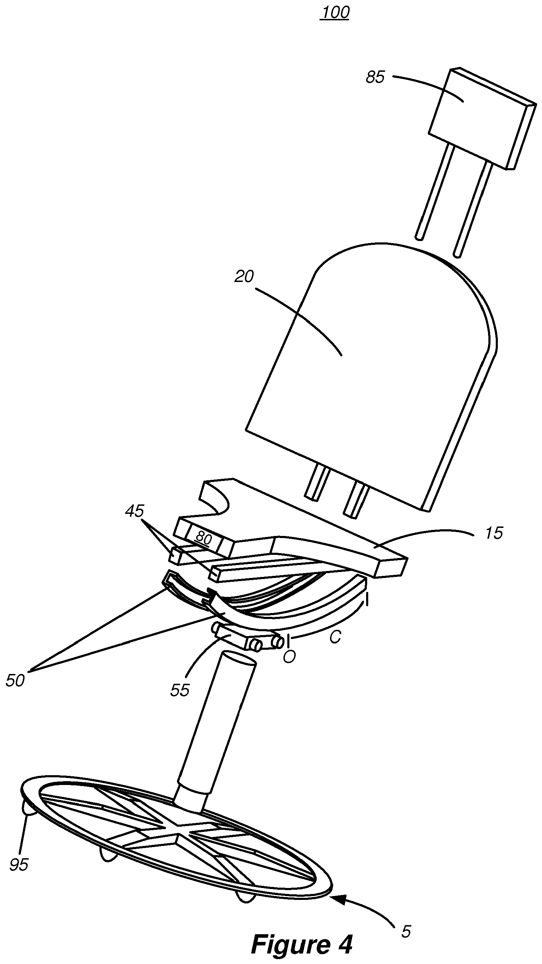

Figure 4 illustrates an exploded front perspective view of the virtual-reality navigation controller 100. A radius of an upward arc C of each of the first and second rails 52 and 54 of the second pair of parallel rails 50 typically ranges from 500-800 mm to prevent counter-phase movement of the user's head in relation to the movement of the seating portion 10. For example, the radius of the upward arc of each of the first and second rails 52 and 54 ranges from 600-750 mm, 650-725 mm, or in some cases approximately 700 mm. By approximately, it is intended that the radius of the upwards arc be within 2% of 700 mm. Though recited in terms of certain ranges, it will be understood that all ranges from the lowest of the lower limits to the highest of the upper limits are included, including all intermediate ranges or specific radius values, within this full range or any specifically recited range. The aforementioned configuration provides the advantage of preventing an undesirable vestibular signal counter to the simulated motion (e.g. acceleration, or deceleration) in virtual-reality. Prevention of the undesirable vestibular (balance) signal is achieved by providing the radius of the upwards arc of each of the rails 52 and 54 at a measurement equaling the distance between the seat 15 and head center of an average-height seated user.

As illustrated in Figure 1, the motion-detection controller 80 is coupled to the seating portion 10. Given this configuration, the motion detection controller 80 is able to detect displacement of the seating portion 10 with respect to the tilting and/or the rotation of the rotatable connector 30 and to communicate the degree of the tilting and the rotation to the virtual-reality device (e.g. the HMD). Communication of the degree of tilting and the rotation of the seating portion to the virtual-reality device facilitates matching of the vestibular (balance), proprioceptive (muscle), and somatosensory (skin) sensations experienced by the user seated in the seating portion 10 during the tilting (i.e. acceleration or deceleration) or the rotation (i.e., turning) to the visual stimulation provided by the virtual-reality device.

Each rail 52 and 54 of the second pair of parallel rails 50 includes a dip 70 at a bottom portion of the C-shape curved profile. When the seat 15 of the seating portion 10 is in a neutral, non-tilted position, for example, (as illustrated in Figure 1) before the user exerts any force to displace and tilt the seating portion 10, respective rollers of the plurality of rollers 60 are disposed in a resting position in the dips 70. Each dip 70 is a shallow dip so as to allow a smooth movement of the respective rollers 60 into and out of the shallow dips 70.

The respective rollers of the plurality of rollers 60 are configured to be shifted out of the dips 70 from the resting position to a tilting position when the user exerts at least one of a backward pushing force or a forward pulling force on the seating portion. Accordingly, the plurality of rollers 60 is configured to be returned to the resting position naturally by a weight of the user sitting in the seating portion 10 when the user ceases to apply the at least one of the pushing or pulling force. The backward pushing force may be a force exerted by the user pushing backwards with feet resting on the floor while sitting in the seating portion 10, and the forward pulling force may be a force exerted by the user pulling forward with feet resting on the floor while sitting in the seating portion 10.

When the user engages in the virtual-reality activity which involves accelerating forward (e.g. driving a race car and pressing on an accelerator pedal), the user initiates the corresponding forward acceleration by firmly placing feet on the floor and exerting the forward pulling force on the seat while seated in the seating portion 10. As a result of the forward pulling force, the respective rollers of the plurality of rollers 60 are shifted out of the dips 70 from the resting position and roll forward in the corresponding first and second rails 52 and 54 of the second pair of parallel rails 50, thereby pitching the seating portion 10 backwards, simulating the pulling force and creating the real-life physical feeling of the pulling gravity shift. As described above, as the user is pitched backwards in the seating portion 10, the user's eyes view a rapid acceleration in the race car virtual-reality environment matching the backwards motion, thereby creating an extra immersive and enhanced feeling of reality without the accompanying simulator sickness.

When engaged in the virtual-reality activity (e.g. driving the race car), the user may wish to brake (e.g., decelerate the vehicle). Deceleration of the vehicle may be achieved by the user firmly placing feet on the floor and exerting the backward pushing force on the seat while seated in the seating portion 10. As a result of the backward pushing force, the respective rollers of the plurality of rollers 60 roll backward in the corresponding first and second rails 52 and 54 of the second pair of parallel rails 50, thereby pitching the seating portion 10 forward, and creating the real-life physical feeling of deceleration or braking in the race car virtual-reality environment to provide an extra immersive and enhanced feeling of reality.

The neutral tilt position (e.g. no forward or backward acceleration) will be achieved when the respective rollers 60 come to rest in the dips 70 along the bottom portion of the corresponding first and second rails 52 and 54. The user thus is able to change the degree of seat tilt with respect to the resting position and initiate acceleration in virtual-reality by pushing away or pulling in with feet resting on the floor. The user's weight will provide a natural incentive for the seating portion 10 to return to the rest position as soon as the user terminates the backward pushing force or the forward pulling force.

Figure 5 illustrates an exploded back perspective view of the virtual-reality navigation controller 100. As illustrated in Figure 5, the virtual-reality navigation controller 100 further includes a counterbalance weight 90 configured to facilitate tilting of the seating portion 10 backward by exerting a downward force on a back portion of the first and second pairs of parallel rails 45 and 50. The weight 90 additionally provides the advantage of adding a force to propel the user forward during forward tilting (e.g., deceleration or braking), thereby requiring less force to be exerted by the user in pulling forward during the forward tilt. This is helpful because leg muscles pulling forward are considerably weaker than leg muscles pushing back. The weight 90 may be coupled to the rotatable connector at a position behind the seating potion 10 in order to provide optimal leverage. The weight 90 may weigh between 20 and 30 pounds.

A maximum tilting displacement due to at least one of a backward tilt and a forward tilt of the seating portion based on a circumference of each rail 52 and 54 of the second pair of parallel rails measured from a center O of the bottom portion of each rail in the corresponding backwards or forward direction ranges from 200-400 mm, for example from 225-375 mm, 250-350 mm, 275-325 mm, or in some cases approximately 300 mm. By approximately, it is intended that the radius of the upwards arc be within 2% of 300 mm. Though recited in terms of certain ranges, it will be understood that all ranges from the lowest of the lower limits to the highest of the upper limits are included, including all intermediate ranges or specific values, within this full range or any specifically recited range. The maximum tilting angle due to at least one of the backward tilt and the forward tilt of the seating portion 10 based on the circumference of each rail 52 and 54 of the second pair of parallel rails 50 measured from the center O of the bottom portion of each rail in the corresponding backwards or forward direction is approximately 25 degrees.

The maximum tilting angle corresponds to a maximum tilting angle ranging from 20-30 degrees, for example 22-28 degrees, or 24-26 degrees, or approximately 25 degrees. Though recited in terms of certain ranges, it will be understood that all ranges from the lowest of the lower limits to the highest of the upper limits are included, including all intermediate ranges or specific values, within this full range or any specifically recited range. The aforementioned maximum tilting angle of approximately 25 degrees will create a gravity pull on vestibular sensors in a middle of the user's ear equivalent to 4.5 m/s<2> linear acceleration. In this sense, the maximum tilting angle of the backward tilt will be sufficient to accurately simulate an acceleration of an avatar of the user from 0 to 30 mph in 3 seconds in virtual-reality, which corresponds to typical car acceleration from a complete stop. The aforementioned configuration thus provides the advantage of giving the user a more realistic feel of acceleration and deceleration by stimulating somatosensory (skin) senses in accordance with the simulated forward acceleration, and stimulating proprioceptive (muscle) senses in accordance with the simulated forward acceleration due to the force and muscle effort of the legs required to tilt the seating portion 10 forward and backward. Since the physical motion experienced by the user corresponds to the visual motion observed, the potential for the user to experience simulator sickness is greatly diminished or eliminated altogether.

The virtual-reality navigation controller 100 further comprises a head-rest 85, coupled to the back-rest 20 and configured to support a head of the user seated in the seating portion 10. The rotatable connector 30 is configured to tilt the seating portion 10 about an axis of the head-rest 85 at a point located in or near (e.g., above) the user's head when the user is seated on the seat. As illustrated in Figure 4, the motion-detection controller 80 including motion sensors (not shown) is coupled to the head-rest 85. As described above, tilting about the point located near the user's head is achieved by the seat 15 rocking back and forth as a result of the rollers 60 rolling along the C-shape profile of the first and second rails 52 and 54 of the second pair of parallel rails 50 positioned underneath the seating portion 10.

Contrary to conventional tilting chairs which are generally configured to tilt about a swivel joint located underneath the seat, the seating portion 10 is configured to tilt at the point located in or near the user's head (e.g., about the axis of the head-rest 85), thereby allowing the motion detection controller 80 to more accurately measure and communicate the actual tilt and roll of the user's head to the virtual-reality device for a more precise matching visual stimulation to reduce lack of vestibular (balance) sensation and the accompanying simulator sickness.

The base 5 includes wheels 95 which are provided in a locked configuration during tilting and rolling of the seating portion 10 and provided in a freely rotatable configuration when the seating portion 10 is locked into a desired configuration for use as a chair during non-virtual-reality activities. The rotatable connector 30 is configured to lock the seating portion 10 into a desired tilted configuration for use as a chair during the non-virtual-reality activities. In this sense, the virtual-reality navigation controller 100 may additionally be used for other purposes (e.g., as an office chair) when the user is not using it for virtual-reality activities. For example, a tilt lock mechanism may be provided to lock the seating portion 10 in forward, middle, and reclined tilt positions for user comfort. This can be accomplished by locking the seat 15 and back-rest 20 in the desired tilt position which also prevents movement of the seating portion 10.

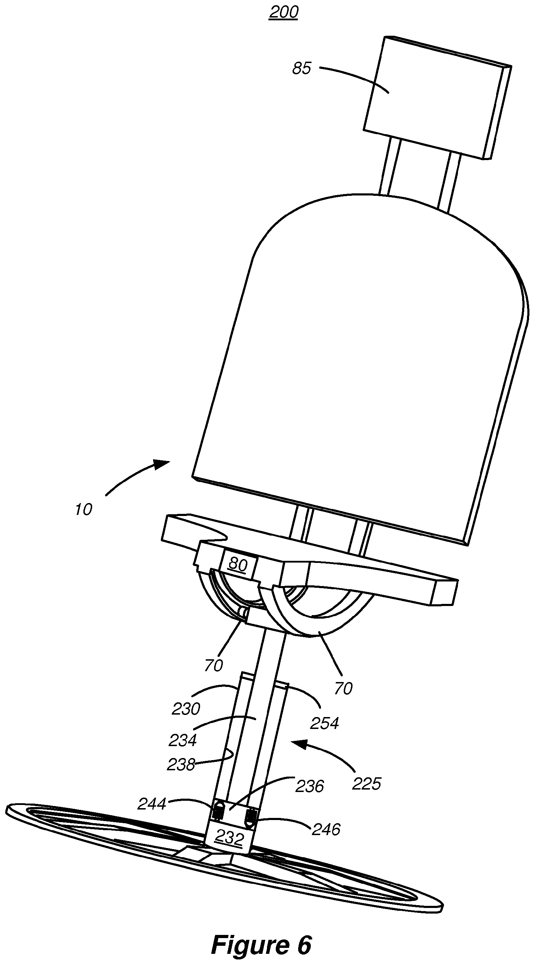

Figure 6 illustrates a front perspective view of a virtual-reality navigation controller 200. The virtual-reality navigation controller 200 of Figure 6 is an example of the virtual-reality navigation controller of Figures 1-5. The virtual-reality navigation controller 200 includes a base 5, and a seating portion 10. The seating portion 10 includes a seat 15 for supporting a weight of a user seated thereon and a back-rest 20 coupled to the seat to move integrally with the seat 15 and to support the user's back. The virtual-reality navigation controller 200 further includes a displacement connector 225 between the seating portion 10 and the base 5 to reciprocate the seating portion 10 upwards and downwards, and a motion-detection controller 80 to measure upwards and downwards displacement of the seating portion 10. The displacement connector 225, which is an example of the vertical support 25, is configured to move the seating portion 10 upwards along with the user to support the user when the user ascends from the seat 15 during virtual-reality activities. The displacement connector 225 is further configured to move the seating portion 10 downwards at a slower maximum speed than the upwards movement, when the user's body rests back on the seat 15. The virtual-reality navigation controller 200 may additionally include the rotatable connector 30 as described above. The roller portion 55 of the rotatable connector 30 may be coupled to the displacement connector 225 instead of the vertical support 25.

The displacement connector 225 includes a cylindrical housing 230 sealably containing a compressible fluid 232 therein, a piston rod 234 reciprocally disposed in the housing 230, and a piston 236 mounted on the piston rod 234 and disposed to reciprocate upwards and downwards along inner walls 238 of the housing 230. The piston 236 is configured to guide the piston rod 234 to keep it centered in the cylindrical housing 230. The displacement connector 225 may further include at least one check-valve 244, 246. The at least one check-valve 244, 246 is configured to increase an amount of flow of the compressible fluid 232 past the piston 236 in a first direction to accelerate the piston rod 234 and the seating portion 10 upwards. The at least one check-valve 244, 246 is further configured to restrict the amount of flow of the compressible fluid 232 past the piston 236 in a second direction to decelerate the piston rod 234 and the seating portion 10 downwards.

The displacement connector 225 is configured to displace or move the seating portion 10 vertically in the upwards and downwards direction, but the movement is not specifically limited to vertical movement. For example, the displacement connector 225 may move the seating portion 10 upwards or downwards at an angle or at a range of angles offset from vertical. For example, the angle off-vertical will range from about 0-45 degrees off-vertical, or 0-15 degrees off vertical, or in some cases approximately 0 degrees off-vertical (i.e., completely vertical). Though recited in terms of certain ranges, it will be understood that all ranges from the lowest of the lower limits to the highest of the upper limits are included, including all intermediate ranges or specific angles, within this full range or any specifically recited range.

The upwards and downwards, or vertical displacement is achieved as a result of the piston rod 234 with the piston 236 reciprocating upwards thereby pushing the seating portion 10 upwards and as a result of the piston rod 234 moving downwards due to the weight of the user resting back in the seat 15. The displacement connector 225 is configured to have a relatively quick expansion stroke where the piston rod 234 extends and raises the seating portion 10 upwards, and a slower compression stroke where the user rests back in the seating portion 10 and the piston rod 234 retracts downwards and compresses the fluid as a result of the exerted user's weight.

The aforementioned configuration may be achieved by, but is not limited to, forming the displacement connector as a gas spring. Given this configuration, the displacement connector 225 forms a gas spring-loaded connection, and the compressible fluid 232 may be, but is not limited to, pressurized nitrogen gas. The cylindrical housing 230 sealably contains the pressurized gas 232 so as to prevent the gas 232 from escaping from the housing 230. The pressurized gas 232 allows the displacement connector 225 to store energy, and the piston 236 mounted on the piston rod 234 reciprocates upwards and downwards inside the cylindrical housing while being closely fitted (i.e., with a very tight clearance between the inner walls of the housing 230) so as to minimize gas flowing between the inner walls 238 and the piston 236 as the piston 236 reciprocates within the housing 230.

When the piston rod 234 is disposed in a position where it is extended upwards from the housing 230, and the user rests his or her weight in the seating portion 10, the piston rod 234 and mounted piston 236 are displaced downwards into the cylindrical housing 230 and compress the gas 232. The at least one check-valve 244, 246 may be disposed in the piston 236 to selectively open and close at least one pathway through which at least a portion of the nitrogen gas may flow past the piston, in order to increase the amount of flow of the compressible fluid 232 past the piston 236 in the upward direction (as compared to the downward direction), thereby increasing a maximum speed at which the piston 236 and the seating portion 10 move upwards (as compared to downwards) or to restrict the amount of flow of the compressible fluid past the piston 236 in the downwards direction, thereby decelerating the maximum speed at which the piston 236 and the seating portion 10 move downwards.

When the user ascends from the seating portion 10, thereby releasing at least a portion of weight from the seating portion 10, the pressurized compressed gas pushes against and displaces the piston rod 234 and piston 236 upwards to an extended position. The at least one check-valve 244, 246 opens the at least one pathway to increase the amount of flow of the gas 232 past the piston 236 and accelerate the piston and the seating portion upwards at a relative speed greater than that at which the piston 236 is moved downwards when the user sits in the seating portion 10. The gas 232 inside the cylindrical housing 230 flows through the at least one check-valve and/or around the piston 236 (between the piston 236 and the inner walls 238 of the housing 230) from one side of the piston 236 to the other as the piston 236 reciprocates upwards and downwards. The piston 236 may include at least one additional pathway to facilitate movement of the compressed gas 232 between opposite sides of the piston 236.

The displacement connector 225 further includes a lubricant contained in the cylindrical housing to lubricate the piston 236 as the piston 236 reciprocates in the upwards and downwards directions. The lubricant is further configured to decelerate or dampen the movement of the piston 236 at the end of the upwards or downwards stroke so as to make for a smoother upwards and downwards movement. The lubricant may be an oily substance (e.g. oil) to reduce friction as the piston 236 reciprocates in the upwards and downwards directions. The displacement connector 225 may additionally include a seal 254 to contain the compressible fluid 232 (e.g., the nitrogen gas) and the lubricant (e.g., the oil) in the housing 230 and prevent leakage of the gas and oil out of the cylindrical housing 230. The seal 254 may be made of a flexible rubber material, and may be, but is not limited to a washer or an O-ring.

The at least one check-valve includes first and second check-valves 244 and 246. The first check-valve 244 is disposed in an open condition and the second check-valve 246 is disposed in a closed condition when the piston rod 234 is extended upwards from the housing 230 for the compressible fluid 232 to travel through the first check-valve 244 and allow the piston 234 to move the seating portion 10 upwards at a first speed matching that of the user's ascent. The first check-valve 244 is disposed in a closed condition and the second check-valve 246 is disposed in an open condition when the piston rod 234 retracts into the housing 230 for the compressible fluid 232 to travel through the second check-valve 246 and allow the piston 234 to move the seating portion 10 downwards at a second speed. The first check-valve 244 may have a larger flow cross-section area than the second check-valve 246, thereby allowing a greater amount of fluid to flow past the piston 236 when the piston rod 234 and piston 236 extend upwards compared to the amount of fluid flowing past the piston 236 when the piston rod 234 and piston 236 retract downwards. Therefore, a maximum value of the first speed is greater than a maximum value of the second speed.

When the piston rod 234 is disposed in the position where it is retracted into the housing 230 in a state in which the pressurized gas is compressed, and the user ascends from the seating portion 10, thereby releasing at least a portion of weight from the seating portion 10, the pressurized compressed gas pushes against and displaces the piston rod 234 and piston 236 upwards and the first check-valve 244 opens the at least one pathway to increase the amount of flow of the gas past the piston 236 in the upwards direction and accelerate the piston rod 234 and the seating portion 10 upwards at a speed matching the user's ascent. When the piston rod 234 is disposed in a position where it is extended upwards from the housing 230, and the user rests his or her weight in the seating portion 10, the piston rod 234 and mounted piston 236 are displaced downwards into the cylindrical housing 230 and compress the gas 232 at a slower speed than the extension.

Even though the second check-valve 246 is disposed in the closed position during the extension, the difference in flow cross-section area between the first and second check-valves 244 and 246 causes the piston 236 to move faster in the upwards direction than in the downwards direction. Thus, the displacement connector 225 achieves quick extension of the piston rod 234 and seating portion 10 coupled thereto allowing the user to stay supported in the seating portion 10 during a quick ascent (e.g. jumping) and achieves slow compression when the user rests back in the seating portion. Once the user's body comes to rest in the seat, the user's weight will lower the seat back into the resting position while simultaneously compressing the gas 232, preparing the seating portion for the next simulated jump in approximately 10 seconds. Given the aforementioned configuration, the displacement connector 225 is able to simulate active upwards accelerations to generally visually match the experienced virtual-reality accelerations, thereby providing the necessary vestibular (balance) sensation to reduce the potential for simulator sickness during the virtual-reality activities. This is especially important for abrupt accelerations experienced in jumps, where the brain is less likely to expect precise agreement between senses. In addition to vestibular stimulation, muscle and skin senses will be stimulated in agreement with the simulated jump or upwards acceleration.

The first check-valve 244 may be a flap valve so as to open at more easily (e.g., at a lower pressure) to facilitate greater flow movement through the first check-valve 244 and accelerate the piston 236 at a greater speed in the upward direction. The at least one check-valve 244, 246 may be a ball check-valve or a disc check-valve. The at least one check-valve 244, 246 may be spring-loaded to keep the check-valve in a closed position.

The motion-detection controller 80 is communicatively coupleable to a virtual-reality device to initiate corresponding upwards and downwards motions in virtual-reality. As similarly described above, the motion-detection controller 80 is communicatively coupleable to the virtual-reality device (e.g., a virtual-reality headset or head-mounted display) to initiate corresponding upwards and downwards motions in virtual-reality. The motion detection controller 80 is configured such that it is able to detect, through the sensors, the degree upwards or downwards displacement of the seating portion 10 in reality, and to communicate the measurements corresponding to the displacement to the virtual-reality device so that the user's avatar in virtual-reality may be subjected to a motion (e.g. upwards acceleration or jump) matching the degree of upwards or vertical displacement in reality. Because the user is subjected to a physical motion in reality which matches a motion in the virtual-reality, the user's vestibular and muscle senses are stimulated synchronously with visual sense, thereby reducing or eliminating altogether simulator sickness.

As described above, the motion-detection controller 80 may be coupled to the seating portion 10. The seating portion may be rotatably coupled to the displacement connector to be rotatable about a vertical axis of the displacement connector. Similarly, as described above with respect to the vertical support 25, the motion-detection controller 80 may be configured to measure yaw rotation of the seating portion 10 about the vertical axis of the displacement connector 225 and communicate the yaw rotation to the virtual-reality device to initiate corresponding rotation in virtual-reality. The motion-detection controller 80 is also configured to measure tilt (i.e., pitch) and communicate the tilt to the virtual-reality device to initiate corresponding acceleration or deceleration in virtual-reality.

The foregoing description, for purpose of explanation, has been described with reference to specific examples. However, the illustrative discussions above are not intended to be exhaustive or to limit the scope of the claims to the precise forms disclosed. Many modifications and variations are possible in view of the above teachings. The examples were chosen in order to best explain the principles underlying the claims and their practical applications, to thereby enable others skilled in the art to best use the examples with various modifications as are suited to the particular uses contemplated.

## Claims

1. A virtual-reality navigation controller (100), comprising:
a base (5);
a seating portion (10), including:
a seat (15) for supporting a weight of a user seated thereon, and
a back-rest (20) coupled to the seat to move integrally with the seat (15) and to support the user's back;
a vertical support (25) to support the seating portion (10) on the base (5);
a rotatable connector (30) between the seating portion (10) and the vertical support (25) to tilt the seating portion (10) about a rotational center of the rotatable connector (30) in response to directional forces exerted by the user when the user is seated on the seat (15); comprising:
a first pair of parallel rails (45) coupled to the seating portion (10);
a second pair of parallel rails (50) coupled to the first pair of parallel rails (45), each rail (52, 54) of the second pair of parallel rails (50) having a C-shaped curved profile; and
a plurality of rollers (60) rollably disposed along the curved profile of each rail (52, 54) of the second pair of rails (50);
wherein a radius of an arc formed by the tilting about the rotational center ranges from 300 mm to 800 mm; and
wherein the virtual-reality navigation controller (100) further comprises motion sensors and a motion-detection controller (80) to measure pitch corresponding to the tilt of the seating portion (10) resulting from the directional forces;
wherein the motion-detection controller (80) is communicatively coupleable or coupled to a virtual-reality device; and
wherein the motion-detection controller (80) detects, through the motion sensors, the degree of tilt corresponding to a vertical and a horizontal displacement of the seating portion (10) in reality, and communicates data corresponding to the tilt to the virtual-reality device so that the user's avatar in virtual-reality is subjected to a motion matching the degree of tilt in reality.

2. The virtual-reality navigation controller of claim 1, wherein the seat (15) extends lengthwise along an, in use, essentially horizontal axis from a proximal end to a distal end, at least a portion of a length of the seat (15) on both left and right sides being concavely curved toward a center axis along the length of the seat (15) to narrow the seat (15) toward the distal end and to accommodate legs of the user during chair movements.

3. The virtual-reality navigation controller of claim 1 or 2, wherein the motion-detection controller (80) is configured to measure yaw corresponding to rotation of the seating portion (10) about an axis of the vertical support (25), e.g. an in use essentially vertical axis of the support.

4. The virtual-reality navigation controller of any one of claims 1-3, wherein the plurality of rollers (60) are included in a roller portion (55) coupled to the vertical support (25).

5. The virtual-reality navigation controller of claim 3 or 4,
wherein the arc corresponds to an upward arc of each rail (52, 54) of the second pair of parallel rails (50) based on the rotational center and ranges from 300 mm to 800 mm, to prevent counter-phase movement of the user's head in relation to the movement of the seating portion (10).

6. The virtual-reality navigation controller of claim 4 or 5, wherein:
the second pair of parallel rails (50) is slidably engaged with the plurality of rollers (60); and
the plurality of rollers (60) is secured within the second pair of parallel rails (50) to slidably tilt the seating portion (10) along the circumferences of the second pair of parallel rails (50).

7. The virtual-reality navigation controller of any one of claims 4-6, wherein the plurality of rollers (60) comprises a first pair of rollers (62) slidably engaged in a first rail (52) of the second pair of parallel rails (50) and a second pair of rollers (64) slidably engaged in a second rail (54) of the second pair of parallel rails (50).

8. The virtual-reality navigation controller of any one of claims 4-7, wherein a radius of an upward arc of each rail (52, 54) of the second pair of parallel rails (50) is approximately 700 mm to prevent counter-phase movement of the user's head in relation to the movement of the seating portion (10).

9. The virtual-reality navigation controller of any one of claims 4-8, wherein:
each rail (52, 54) of the second pair of parallel rails (50) comprises a dip (70) at a bottom portion of the C-shape curved profile; and
in a non-tilted position of the seating portion (10), respective rollers of the plurality of rollers (60) are disposed in a resting position in the dips (70).

10. The virtual-reality navigation controller of claim 9, wherein:
the respective rollers are configured to be shifted out of the dips (70) from the resting position to a tilting position when the user exerts at least one of a backward pushing force or a forward pulling force on the seating portion (10); and
the plurality of rollers (60) is configured to be returned to the resting position naturally by a weight of the user sitting on the seating portion (10) when the user ceases to apply the at least one of the pushing or pulling force.

11. The virtual-reality navigation controller of claim 10, wherein:
the backward pushing force comprises a force exerted by the user pushing backwards with feet resting on the floor while sitting in the seating portion (10); and
the forward pulling force comprises a force exerted by the user pulling forward with feet resting on the floor while sitting in the seating portion (10),
wherein, optionally, a maximum tilting displacement due to at least one of a backward tilt and a forward tilt of the seating portion (10) based on a circumference of each rail (52, 54) of the second pair of parallel rails (50) measured from a center of the bottom portion of each rail (52, 54) of the second pair of parallel rails (50) in the corresponding backwards or forward direction is approximately 300 mm.

12. The virtual-reality navigation controller of any one of claims 4-11, further comprising a counterbalance weight (90) to facilitate tilting of the seating portion (10) backward by exerting a downward force on a back portion of the first and second pairs of parallel rails (45, 50).

13. The virtual-reality navigation controller of any one of claims 1-12, wherein the radius of the arc formed by the tilting about the rotational center of the rotatable connector (30) ranges from 500 mm to 700 mm; and/or
wherein:
the seating portion (10) is rotatably coupled to the vertical support (25) to be rotatable about an axis of the vertical support (25), e.g. an in use vertical axis of the support (25), and
the motion-detection controller (80) is configured to measure a degree of the rotation and communicate the degree of the rotation to the virtual-reality device to initiate corresponding rotation in virtual-reality; and/or
wherein the motion-detection controller (80) is coupled to the seating portion (10).

14. The virtual-reality navigation controller of any one of claims 1-13, further comprising
a head-rest (85) configured to support a head of the user seated in the seating portion (10) and coupled to the back-rest (20),
wherein the rotatable connector (30) is configured to tilt the seating portion (10) about an axis of the head-rest (85) at a point located near the user's head when the user is seated on the seat (15), and
wherein the motion-detection controller (80) is coupled to the head-rest (85).

15. The virtual-reality navigation controller of any one of claims 1-14, wherein:
the base (5) comprises wheels (95) which are configurable to be locked during tilting of the seating portion (10) and freely rotatable when the seating portion (10) is configured for use as a chair during non-virtual-reality activities; and
the rotatable connector (30) is configured to lock the seating portion (10) into a desired configuration for use as a chair during the non-virtual-reality activities.

## Patentansprüche

1. Eine Virtual-Reality-Navigationssteuereinrichtung (100), beinhaltend:
eine Basis (5);
einen Sitzabschnitt (10), umfassend:
einen Sitz (15) zum Stützen eines Gewichts eines darauf sitzenden Benutzers und
eine Rückenlehne (20), die mit dem Sitz gekoppelt ist, um sich integral mit dem Sitz (15) zu bewegen und den Rücken des Benutzers zu stützen;
eine vertikale Stütze (25) zum Stützen des Sitzabschnitts (10) auf der Basis (5);
ein drehbares Verbindungsstück (30) zwischen dem Sitzabschnitt (10) und der vertikalen Stütze (25) zum Neigen des Sitzabschnitts (10) um ein Drehzentrum des drehbaren Verbindungsstücks (30) als Reaktion auf von dem Benutzer ausgeübte gerichtete Kräfte, wenn der Benutzer auf dem Sitz (15) sitzt; beinhaltend:
ein erstes Paar paralleler Schienen (45), die mit dem Sitzabschnitt (10) gekoppelt sind;
ein zweites Paar paralleler Schienen (50), die mit dem ersten Paar paralleler Schienen (45) gekoppelt sind, wobei jede Schiene (52, 54) des zweiten Paars paralleler Schienen (50) ein C-förmig gekrümmtes Profil aufweist; und
eine Vielzahl von Rollen (60), die entlang des gekrümmten Profils jeder Schiene (52, 54) des zweiten Paars Schienen (50) rollbar angeordnet sind;
wobei ein Radius eines durch das Neigen um das Drehzentrum gebildeten Bogens im Bereich von 300 mm bis 800 mm liegt; und
wobei die Virtual-Reality-Navigationssteuereinrichtung (100) ferner Bewegungssensoren und eine Bewegungsdetektionssteuereinrichtung (80) zum Messen von Nickbewegung, die der Neigung des Sitzabschnitts (10) entspricht, die sich aus den gerichteten Kräften ergibt, beinhaltet;
wobei die Bewegungsdetektionssteuereinrichtung (80) kommunikativ mit einer Virtual-Reality-Vorrichtung koppelbar oder gekoppelt ist; und
wobei die Bewegungsdetektionssteuereinrichtung (80) durch die Bewegungssensoren den Grad an Neigung detektiert, der einer vertikalen und einer horizontalen Verschiebung des Sitzabschnitts (10) in der Realität entspricht, und Daten, die der Neigung entsprechen, an die Virtual-Reality-Vorrichtung kommuniziert, sodass der Avatar des Benutzers in der Virtual Reality einer Bewegung ausgesetzt wird, die dem Grad an Neigung in der Realität entspricht.

2. Virtual-Reality-Navigationssteuereinrichtung gemäß Anspruch 1, wobei sich der Sitz (15) der Länge nach entlang einer im Einsatz im Wesentlichen horizontalen Achse von einem proximalen Ende zu einem distalen Ende erstreckt, wobei mindestens ein Abschnitt einer Länge des Sitzes (15) sowohl auf der linken als auch auf der rechten Seite entlang der Länge des Sitzes (15) zu einer Mittelachse hin konkav gekrümmt ist, um den Sitz (15) zu dem distalen Ende hin zu verschmälern und um den Beinen des Benutzers während Stuhlbewegungsvorgängen Platz zu bieten.

3. Virtual-Reality-Navigationssteuereinrichtung gemäß Anspruch 1 oder 2, wobei die Bewegungsdetektionssteuereinrichtung (80) konfiguriert ist, um Gierbewegung zu messen, die der Drehung des Sitzabschnitts (10) um eine Achse der vertikalen Stütze (25), z. B. eine im Einsatz im Wesentlichen vertikale Achse der Stütze, entspricht.

4. Virtual-Reality-Navigationssteuereinrichtung gemäß einem der Ansprüche 1-3, wobei die Vielzahl von Rollen (60) in einem mit der vertikalen Stütze (25) gekoppelten Rollenabschnitt (55) umfasst sind.

5. Virtual-Reality-Navigationssteuereinrichtung gemäß Anspruch 3 oder 4,
wobei der Bogen einem nach oben gerichteten Bogen jeder Schiene (52, 54) des zweiten Paars paralleler Schienen (50) auf der Basis des Drehzentrums entspricht und im Bereich von 300 mm bis 800 mm liegt, um einen gegenphasigen Bewegungsvorgang des Kopfes des Benutzers in Bezug auf den Bewegungsvorgang des Sitzabschnitts (10) zu verhindern.

6. Virtual-Reality-Navigationssteuereinrichtung gemäß Anspruch 4 oder 5, wobei:
das zweite Paar paralleler Schienen (50) gleitend in die Vielzahl von Rollen (60) eingreift; und
die Vielzahl von Rollen (60) innerhalb des zweiten Paars paralleler Schienen (50) gesichert sind, um den Sitzabschnitt (10) entlang der Umfänge des zweiten Paars paralleler Schienen (50) gleitend zu neigen.

7. Virtual-Reality-Navigationssteuereinrichtung gemäß einem der Ansprüche 4-6, wobei die Vielzahl von Rollen (60) ein erstes Paar Rollen (62), das gleitend in eine erste Schiene (52) des zweiten Paars paralleler Schienen (50) eingreift, und ein zweites Paar Rollen (64), das gleitend in eine zweite Schiene (54) des zweiten Paars paralleler Schienen (50) eingreift, beinhalten.

8. Virtual-Reality-Navigationssteuereinrichtung gemäß einem der Ansprüche 4-7, wobei ein Radius eines nach oben gerichteten Bogens jeder Schiene (52, 54) des zweiten Paars paralleler Schienen (50) ungefähr 700 mm beträgt, um einen gegenphasigen Bewegungsvorgang des Kopfes des Benutzers in Bezug auf den Bewegungsvorgang des Sitzabschnitts (10) zu verhindern.

9. Virtual-Reality-Navigationssteuereinrichtung gemäß einem der Ansprüche 4-8, wobei:
jede Schiene (52, 54) des zweiten Paars paralleler Schienen (50) an einem unteren Abschnitt des C-förmig gekrümmten Profils eine Senke (70) beinhaltet; und
in einer nicht geneigten Position des Sitzabschnitts (10) jeweilige Rollen der Vielzahl von Rollen (60) in einer Ruheposition in den Senken (70) angeordnet sind.

10. Virtual-Reality-Navigationssteuereinrichtung gemäß Anspruch 9, wobei:
die jeweiligen Rollen konfiguriert sind, um aus der Ruheposition aus den Senken (70) heraus in eine Neigeposition verlagert zu werden, wenn der Benutzer mindestens eine von einer nach hinten drückenden Kraft oder einer nach vorne ziehenden Kraft auf den Sitzabschnitt (10) ausübt; und
die Vielzahl von Rollen (60) konfiguriert sind, um auf natürliche Weise durch ein Gewicht des auf dem Sitzabschnitt (10) sitzenden Benutzers in die Ruheposition zurückgeführt zu werden, wenn der Benutzer aufhört, die mindestens eine von der drückenden oder der ziehenden Kraft anzuwenden.

11. Virtual-Reality-Navigationssteuereinrichtung gemäß Anspruch 10, wobei:
die nach hinten drückende Kraft eine Kraft beinhaltet, die von dem Benutzer ausgeübt wird, der mit den Füßen auf dem Boden ruhend nach hinten drückt, während er auf dem Sitzabschnitt (10) sitzt; und
die nach vorne ziehende Kraft eine Kraft beinhaltet, die von dem Benutzer ausgeübt wird, der mit den Füßen auf dem Boden ruhend nach vorne zieht, während er auf dem Sitzabschnitt (10) sitzt,
wobei optional eine maximale Neigeverschiebung aufgrund von mindestens einer von einer Rückwärtsneigung und einer Vorwärtsneigung des Sitzabschnitts (10) basierend auf einem Umfang jeder Schiene (52, 54) des zweiten Paars paralleler Schienen (50), gemessen von einem Zentrum des unteren Abschnitts jeder Schiene (52, 54) des zweiten Paars paralleler Schienen (50) in der entsprechenden Rückwärts- oder Vorwärtsrichtung, ungefähr 300 mm beträgt.

12. Virtual-Reality-Navigationssteuereinrichtung gemäß einem der Ansprüche 4-11, ferner beinhaltend ein Gegengewicht (90), um das Neigen des Sitzabschnitts (10) nach hinten durch Ausüben einer nach unten gerichteten Kraft auf einen hinteren Abschnitt des ersten und des zweiten Paars paralleler Schienen (45, 50) zu ermöglichen.

13. Virtual-Reality-Navigationssteuereinrichtung gemäß einem der Ansprüche 1-12, wobei der Radius des durch das Neigen um das Drehzentrum des drehbaren Verbindungsstücks (30) gebildeten Bogens im Bereich von 500 mm bis 700 mm liegt; und/oder
wobei:
der Sitzabschnitt (10) drehbar mit der vertikalen Stütze (25) gekoppelt ist, um um eine Achse der vertikalen Stütze (25), z. B. eine im Einsatz vertikale Achse der Stütze (25), drehbar zu sein, und
die Bewegungsdetektionssteuereinrichtung (80) konfiguriert ist, um einen Grad der Drehung zu messen und den Grad der Drehung an die Virtual-Reality-Vorrichtung zu kommunizieren, um eine entsprechende Drehung in der Virtual Reality zu initiieren; und/oder
wobei die Bewegungsdetektionssteuereinrichtung (80) mit dem Sitzabschnitt (10) gekoppelt ist.

14. Virtual-Reality-Navigationssteuereinrichtung gemäß einem der Ansprüche 1-13, ferner beinhaltend:
eine Kopfstütze (85), die konfiguriert ist, um einen Kopf des auf dem Sitzabschnitt (10) sitzenden Benutzers zu stützen, und mit der Rückenlehne (20) gekoppelt ist,
wobei das drehbare Verbindungsstück (30) konfiguriert ist, um den Sitzabschnitt (10) um eine Achse der Kopfstütze (85) an einem Punkt, der sich in der Nähe des Kopfs des Benutzers befindet, zu neigen, wenn der Benutzer auf dem Sitz (15) sitzt, und
wobei die Bewegungsdetektionssteuereinrichtung (80) mit der Kopfstütze (85) gekoppelt ist.

15. Virtual-Reality-Navigationssteuereinrichtung gemäß einem der Ansprüche 1-14, wobei:
die Basis (5) Räder (95) beinhaltet, die konfigurierbar sind, um während des Neigens des Sitzabschnitts (10) arretiert zu sein und frei drehbar zu sein, wenn der Sitzabschnitt (10) während Nicht-Virtual-Reality-Aktivitäten zur Verwendung als ein Stuhl konfiguriert ist; und
das drehbare Verbindungsstück (30) konfiguriert ist, um den Sitzabschnitt (10) zur Verwendung als ein Stuhl während der Nicht-Virtual-Reality-Aktivitäten in einer gewünschten Konfiguration zu arretieren.

## Revendications

1. Un appareil de commande de navigation de réalité virtuelle (100), comprenant :
une base (5) ;
une portion d'assise (10), incluant :
un siège (15) pour supporter un poids d'un utilisateur assis sur celui-ci, et
un dossier (20) couplé au siège afin de bouger de façon solidaire avec le siège (15) et
de supporter le dos de l'utilisateur ;
un support vertical (25) pour supporter la portion d'assise (10) sur la base (5) ;
un élément de raccordement rotatif (30) entre la portion d'assise (10) et le support vertical (25) afin d'incliner la portion d'assise (10) autour d'un centre de rotation de l'élément de raccordement rotatif (30) en réponse à des forces directionnelles exercées par l'utilisateur lorsque l'utilisateur est assis sur le siège (15) ; comprenant :
une première paire de rails parallèles (45) couplés à la portion d'assise (10) ;
une deuxième paire de rails parallèles (50) couplés à la première paire de rails parallèles (45), chaque rail (52, 54) de la deuxième paire de rails parallèles (50) ayant un profil incurvé en forme de C ; et
une pluralité de rouleaux (60) disposés de façon à pouvoir rouler le long du profil incurvé de chaque rail (52, 54) de la deuxième paire de rails (50) ;
dans lequel un rayon d'un arc formé par l'inclinaison autour du centre de rotation est compris dans l'intervalle allant de 300 mm à 800 mm ; et
l'appareil de commande de navigation de réalité virtuelle (100) comprenant en outre des capteurs de mouvement et un appareil de commande de détection de mouvement (80) afin de mesurer un pas correspondant à l'inclinaison de la portion d'assise (10) résultant des forces directionnelles ;
dans lequel l'appareil de commande de détection de mouvement (80) peut être couplé de façon à communiquer ou est couplé à un dispositif de réalité virtuelle ; et
dans lequel l'appareil de commande de détection de mouvement (80) détecte, par l'intermédiaire des capteurs de mouvement, le degré d'inclinaison correspondant à un déplacement vertical et un déplacement horizontal de la portion d'assise (10) dans la réalité, et communique des données correspondant à l'inclinaison par rapport au dispositif de réalité virtuelle de sorte que l'avatar de l'utilisateur dans la réalité virtuelle est soumis à un mouvement qui concorde avec le degré d'inclinaison dans la réalité.

2. L'appareil de commande de navigation de réalité virtuelle de la revendication 1, dans lequel le siège (15) s'étend dans le sens de la longueur le long, lors de l'utilisation, d'un axe essentiellement horizontal d'une extrémité proximale à une extrémité distale, au moins une portion d'une longueur du siège (15) à la fois sur le côté gauche et sur le côté droit étant incurvée de façon concave vers un axe central le long de la longueur du siège (15) afin de rétrécir le siège (15) vers l'extrémité distale et de loger les jambes de l'utilisateur pendant que la chaise bouge.

3. L'appareil de commande de navigation de réalité virtuelle de la revendication 1 ou de la revendication 2, dans lequel l'appareil de commande de détection de mouvement (80) est configuré pour mesurer un lacet correspondant à une rotation de la portion d'assise (10) autour d'un axe du support vertical (25), par ex. un axe du support essentiellement vertical lors de l'utilisation.

4. L'appareil de commande de navigation de réalité virtuelle de n'importe laquelle des revendications 1 à 3, dans lequel la pluralité de rouleaux (60) sont inclus dans une portion de rouleaux (55) couplée au support vertical (25).

5. L'appareil de commande de navigation de réalité virtuelle de la revendication 3 ou de la revendication 4,
dans lequel l'arc correspond à un arc vers le haut de chaque rail (52, 54) de la deuxième paire de rails parallèles (50) rapporté au centre de rotation et est compris dans l'intervalle allant de 300 mm à 800 mm, afin d'empêcher que la tête de l'utilisateur ne bouge en contre-phase relativement à la façon dont la portion d'assise bouge (10).

6. L'appareil de commande de navigation de réalité virtuelle de la revendication 4 ou de la revendication 5, dans lequel :
la deuxième paire de rails parallèles (50) est mise en prise par coulissement avec la pluralité de rouleaux (60) ; et
la pluralité de rouleaux (60) est assujettie au sein de la deuxième paire de rails parallèles (50) afin d'incliner par coulissement la portion d'assise (10) le long des circonférences de la deuxième paire de rails parallèles (50).

7. L'appareil de commande de navigation de réalité virtuelle de n'importe laquelle des revendications 4 à 6, dans lequel la pluralité de rouleaux (60) comprend une première paire de rouleaux (62) mise en prise par coulissement dans un premier rail (52) de la deuxième paire de rails parallèles (50) et une deuxième paire de rouleaux (64) mise en prise par coulissement dans un deuxième rail (54) de la deuxième paire de rails parallèles (50).

8. L'appareil de commande de navigation de réalité virtuelle de n'importe laquelle des revendications 4 à 7, dans lequel un rayon d'un arc vers le haut de chaque rail (52, 54) de la deuxième paire de rails parallèles (50) est d'approximativement 700 mm afin d'empêcher que la tête de l'utilisateur ne bouge en contre-phase relativement à la façon dont la portion d'assise bouge (10).

9. L'appareil de commande de navigation de réalité virtuelle de n'importe laquelle des revendications 4 à 8, dans lequel :
chaque rail (52, 54) de la deuxième paire de rails parallèles (50) comprend un creux (70) au niveau d'une portion inférieure du profil incurvé en forme de C ; et
dans une position non inclinée de la portion d'assise (10), des rouleaux respectifs de la pluralité de rouleaux (60) sont disposés dans une position de repos dans les creux (70).

10. L'appareil de commande de navigation de réalité virtuelle de la revendication 9, dans lequel :
les rouleaux respectifs sont configurés pour être décalés en dehors des creux (70) de la position de repos à une position d'inclinaison lorsque l'utilisateur exerce au moins une force parmi une force consistant à pousser vers l'arrière ou une force consistant à tirer vers l'avant sur la portion d'assise (10) ; et
la pluralité de rouleaux (60) est configurée pour être renvoyée à la position de repos naturellement par un poids de l'utilisateur qui s'assoit sur la portion d'assise (10) lorsque l'utilisateur cesse d'appliquer l'au moins une force parmi les force consistant à pousser ou à tirer.

11. L'appareil de commande de navigation de réalité virtuelle de la revendication 10, dans lequel :
la force consistant à pousser vers l'arrière comprend une force exercée par l'utilisateur qui pousse vers l'arrière avec les pieds reposant sur le sol tandis qu'il est assis sur la portion d'assise (10) ; et
la force consistant à tirer vers l'avant comprend une force exercée par l'utilisateur qui tire vers l'avant avec les pieds reposant sur le sol tandis qu'il est assis sur la portion d'assise (10),
dans lequel, facultativement, un déplacement par inclinaison maximum du fait d'au moins une inclinaison parmi une inclinaison vers l'arrière et une inclinaison vers l'avant de la portion d'assise (10) sur la base d'une circonférence de chaque rail (52, 54) de la deuxième paire de rails parallèles (50) mesuré depuis un centre de la portion inférieure de chaque rail (52, 54) de la deuxième paire de rails parallèles (50) dans la direction vers l'arrière ou vers l'avant correspondante est d'approximativement 300 mm.

12. L'appareil de commande de navigation de réalité virtuelle de n'importe laquelle des revendications 4 à 11, comprenant en outre un contrepoids (90) afin de faciliter l'inclinaison de la portion d'assise (10) vers l'arrière en exerçant une force vers le bas sur une portion arrière des première et deuxième paires de rails parallèles (45, 50).

13. L'appareil de commande de navigation de réalité virtuelle de n'importe laquelle des revendications 1 à 12, dans lequel le rayon de l'arc formé par l'inclinaison autour du centre de rotation de l'élément de raccordement rotatif (30) est compris dans l'intervalle allant de 500 mm à 700 mm ; et/ou
dans lequel :
la portion d'assise (10) est couplée de façon rotative au support vertical (25) afin d'être rotative autour d'un axe du support vertical (25), par ex. un axe vertical du support (25) lors de l'utilisation, et
l'appareil de commande de détection de mouvement (80) est configuré pour mesurer un degré de la rotation et communiquer le degré de la rotation au dispositif de réalité virtuelle afin d'initialiser une rotation correspondante dans la réalité virtuelle ; et/ou dans lequel l'appareil de commande de détection de mouvement (80) est couplé à la portion d'assise (10).

14. L'appareil de commande de navigation de réalité virtuelle de n'importe laquelle des revendications 1 à 13, comprenant en outre
un appuie-tête (85) configuré pour supporter une tête de l'utilisateur assis sur la portion d'assise (10) et couplé au dossier (20),
dans lequel l'élément de raccordement rotatif (30) est configuré pour incliner la portion d'assise (10) autour d'un axe de l'appuie-tête (85) au niveau d'un point situé près de la tête de l'utilisateur lorsque l'utilisateur est assis sur le siège (15), et
dans lequel l'appareil de commande de détection de mouvement (80) est couplé à l'appuie-tête (85).

15. L'appareil de commande de navigation de réalité virtuelle de n'importe laquelle des revendications 1 à 14, dans lequel :
la base (5) comprend des roues (95) qui peuvent être configurées pour être verrouillées durant l'inclinaison de la portion d'assise (10) et librement rotatives lorsque la portion d'assise (10) est configurée pour être utilisée comme une chaise durant des activités de réalité non virtuelle ; et
l'élément de raccordement rotatif (30) est configuré pour verrouiller la portion d'assise (10) dans une configuration souhaitée pour être utilisée comme une chaise durant les activités de réalité non virtuelle.
